# EUROPÄISCHE PATENTSCHRIFT

(11) **EP 0 650 529 B1**
(45) Veröffentlichungstag und Bekanntmachung des Hinweises auf die Patenterteilung: **01.10.1997**
(21) Anmeldenummer: 93915794.7
(22) Anmeldetag: 05.07.1993
(51) Int. Cl.: C14C 9/02, C14C 11/00, C08G 18/36, C08G 18/38, C08G 18/08

(54) **NEUE LEDERFETTUNGSMITTEL UND IHRE VERWENDUNG (II)**
NEW GREASES FOR LEATHER AND THEIR USE (II)
NOUVEAUX AGENTS DE GRAISSAGE DU CUIR ET LEUR UTILISATION (II)

(30) Priorität: 14.07.1992 DE 4223110
(43) Veröffentlichungstag der Anmeldung: 03.05.1995
(73) Patentinhaber: Henkel Kommanditgesellschaft auf Aktien, 40191 Düsseldorf (DE)
(72) Erfinder: RITTER, Wolfgang, D-42781 Haan (DE); ZAUNS HUBER, Rudolf, D-40589 Düsseldorf (DE); RUSCHEINSKY, Emil, D-51381 Leverkusen (DE); ORTANDERL, Stefanie, D-41363 Jüchen (DE)
(86) Internationale Anmeldenummer: EP9301729
(87) Internationale Veröffentlichungsnummer: WO9401586

(56) Entgegenhaltungen:
- EP-A- 0 444 454
- WO-A-92/00337
- DE-A- 1 916 972
- DE-A- 3 942 681
- FR-A- 2 159 408
- US-A- 4 056 493
- K.Paulingk, R.Hagen: Lederherstellung, Leipzig 1973, S.234
- Bibliothek des Leders - Band 4: Entfetten, Fetten und Hydrophobieren bei der Lederherstellung; H.Herfeld (Hrsg.), Frankfurt 1987, S.189-191
- Ullmanns Encyklopädie der technischen Chemie, 4.Aufl., Band 16, Weinheim 1978, S.159

## Beschreibung

Die Fettung pflanzlich und/oder mineralisch gegerbter Leder beziehungsweise Pelzfelle ist ein essentieller Verfahrensschritt in der Ausrüstung zum gebrauchsfertigen Wertstoff. Die Form der Fettverteilung in der Hautsubstanz und das Ausmaß der Einbindung der Fettkomponenten in die Hautsubstanz beeinflussen die Eigenschaften und die Gebrauchsfähigkeit der Fertigprodukte entscheidend. Es besteht dabei umfangreiches Fachwissen zu möglichen Interaktionen zwischen den Fettkomponenten einerseits und der gegerbten, sowie Restgerbstoffe enthaltenden Hautsubstanz andererseits. Der bestimmte Aufbau der Fettungsmittel - beispielsweise das Ausmaß ihrer lipophilen Gruppen und gegebenenfalls vorliegenden Reaktivgruppen zur Umsetzung mit geeigneten Reaktivbestandteilen im gegerbten Leder - bestimmen unter anderem die Dauerhaftigkeit und Wirkung der fettenden Ausrüstung im praktischen Gebrauch der Leder- und Pelzwaren.

Ein für die Praxis wichtiger Aspekt liegt in der Schaffung von fettenden Ausrüstungsmitteln, die in der gegerbten Hautsubstanz so zuverlässig gebunden werden können, daß eine für die praktischen Bedürfnisse hinreichende Wasch- und Reinigungsbeständigkeit der Leder-und Pelzwaren sichergestellt ist. Hochwertige Lederwaren, beispielsweise aus der Bekleidungsindustrie, sollen dabei sowohl der wäßrig-tensidischen Wäsche als auch gegebenenfalls einer chemischen Reinigung ohne wesentliche Qualitätseinbuße zugänglich sein. Für Sonderfälle wird die weiterführende Bedingung hinreichender Wasserdichtigkeit des fertig ausgerüsteten Leders gewünscht.

Zur wasserdichten Ausrüstung von Leder oder Pelzen sind insbesondere drei Verfahrensprinzipien bekannt:
1. Imprägnierung durch Einlagerung wasserunlöslicher Verbindungen, zum Beispiel feste Fette, Wachse oder spezielle Polymere,
2. Imprägnierung durch Einlagerung wasserquellender Verbindungen, die bei Wasseraufnahme hochviskose Emulsionen bilden und die Faserzwischenräume des Leders verstopfen, zum Beispiel spezielle Emulgatoren vom W/0-Typ,
3. Behandlung mit hydrophobierend wirkenden Verbindungen, zum Beispiel Aluminium-, Chrom- und/oder Zirkonkomplexe, Silkone oder organische Fluorverbindungen.

Die DE 1 669 347 beschreibt die Anwendung von wasseremulgierbaren Sulfobernsteinsäure-Halbestern zum Fetten von Leder, wobei jedoch noch keine Wasserdichteffekte erzielt werden. Gegenstand der EP 193 832 ist ein Verfahren zur Herstellung wasserdichter Leder oder Pelze unter Verwendung von Sulfobernsteinsäure-Monoestern in Kombination mit imprägnierenden und/oder hydrophobierenden Fettungsmitteln, wobei das Kennzeichen dieses Verfahrens darin liegt, daß man die Leder oder Pelze im Anschluß an die Nachgerbung in wäßriger Flotte mit imprägnierenden und/oder hydrophobierenden Fettungsmitteln behandelt, die Sulfobernsteinsäure-Monoester-Salze mit C₁₂₋₂₄-Fettresten enthalten, und nach Absäuern durch Zugabe eines Chrom-, Zirkon- und/oder Aluminiumsalzes fixiert. Bevorzugt werden die Sulfobernsteinsäure-Monoester-Salze mit imprägnierenden Fettungsmitteln aus der Gruppe oxidierte oder oxidierte und teilsulfierte C₁₈₋₂₆-Kohlenwasserstoffe oder C₃₂₋₄₀-Wachse, Phosphorsäuremono-C₁₂₋₂₄-Alkylester, Citronensäuremono-C₁₆₋₂₄-Alkylester, Sorbitan-, Glycerin- und/oder Pentaerythrit-C₁₆₋₂₄-Fettsäureester eingesetzt.

In jüngster Zeit werden für die fettende Ausrüstung von insbesondere mineralisch gegerbten Ledern und Pelzen amphiphile Mittel beschrieben, die bestimmt ausgewählte Co-Oligomere von einerseits hydrophoben beziehungsweise oleophilen Monomeren und andererseits hydrophilen Monomerbestandteilen darstellen. Amphiphile Mittel dieser Art können in Form wäßriger Dispersionen, Emulsionen und/oder Lösungen nach Abschluß der Hauptgerbung in die auszurüstenden Leder oder Felle eingearbeitet - beispielsweise eingewalkt - werden. Insbesondere im Fall mineralisch gegerbter Leder oder Pelzfelle können diese amphiphilen Mittel gleichzeitig die Funktion der Nachgerbung übernehmen. Es kann schließlich eine abschließende Fixierung der amphiphilen Mittel mit insbesondere Mineralgerbstoffen vorgesehen sein. Die jüngere Patentliteratur beschreibt Hilfsstoffe der hier betroffenen Art. So sind zum Beispiel in der EP 372 746 entsprechende Mittel und ihre Anwendung beschrieben, wobei die amphiphilen Copolymere aus einem überwiegenden Anteil wenigstens eines hydrophoben Monomeren und einem untergeordneten Anteil wenigstens eines copolymerisierbaren hydrophilen Monomeren gebildet sind. Als hydrophobe Monomere sind aufgezählt: langkettige Alkyl(meth)acrylate, langkettige Alkoxy- oder Alkylphenoxy(polyethylen-oxid)-(meth)acrylate, pmäre Alkene, Vinylester von lankttigen Alkylcarbonsäuren und deren Gemische. Die in geringerem Anteil vorliegenden hydrophilen Comonomeren sind ethylenisch ungesättigte wasserlösliche Säuren oder hydrophile basische Comonomere. Das Molekulargewicht (Gewichtsmittel) der Copolymeren liegt im Bereich von 2.000 bis 100.000.

WO 92/00337 betrifft die Verwendung wäßriger Polyurethan-Dispersionen in der Lederzurichtung. Als Polyolkomponente im Polyurethanfestkörper sind gemäß dieser Druckschrift mit Carbonsäuren ringgeöffnete epoxidierte Fettsäureester enthalten.

FR-A-2 159 408 betrifft die Verwendung von Polyurethanen zur Oberflächenbehandlung von Textilien und Leder.

Aus K. Pauling, L. Hagen "Lederherstellung", Leipzig 1973, Seite 234, ist bekannt, daß der Begriff der Imgränierung von Leder sich im Fachjargon des Ledertechnikers sowohl auf Prozesse der Fettung/Hydrophobierung als auch auf Prozesse der Lederzurichtung beziehen kann.

Daß die Prozesse Fettung/Hydrophobierung und Zurichtung völlig unterschiedliche Prozesse sind, ist eine dem Ledertechniker notorisch vertraute Tatsache. Dabei ist dem Ledertechniker insbesondere bekannt, daß die Fettung/Hydrophobierung darauf abzielt, Substanzen in das Ledergefüge einzulagern, während die Lederzurichtung darauf abzielt, Substanzen auf die Oberfläche des Leders aufzubringen. Dieses Wissens des Fachmanns ist z. B. in den Dokumenten
- "Bibliothek des Leders - Band 4: Entfetten, Fetten und Hydrophobieren bei der Lederherstellung"; H. Herfeld (Herausgeber); Frankfurt 1987, Seiten 189-191 und
- "Ullmanns Encyklopädie der technischen Chemie"; 4. Auflage; Band 16; Weinheim 1978, Seite 159
beschrieben.

Die EP 412 389 beschreibt als Mittel zum Hydrophobieren von Leder und Pelzfellen den Einsatz von Copolymerisaten, die durch radikalische Copolymerisation von (a) C₈₋₄₀-Monoolefinen mit (b) ethylenisch ungesättigten C₄₋₈-Dicarbonsäureanhydriden nach Art einer Substanzpolymerisation bei Temperaturen von 80 bis 300°C zu Copolymerisaten mit Molmassen von 500 bis 20.000 g/Mol, anschließende Solvolyse der Anhydridgruppen der Copolymerisate und zumindest partielle Neutralisation der bei der Solvolyse entstehenden Carboxylgruppen in wäßrigem Medium mit Basen hergestellt worden sind und die in Form von wäßrigen Dispersionen oder Lösungen vorliegen. In der EP 418 661 wird zum gleichen Zweck die Verwendung von Copolymerisaten beschrieben, die (a) 50 bis 90 Gew.-% C₈₋₄₀-Alkl(meth)acrylate, Vinylester von C₈₋₄₀-Carbonsäuren oder deren Mischungen und (b) 10 bis 50 Gew.-% monoethylenisch ungesättigte C₃₋₁₂-Carbonsäuren, monoethylenisch ungesättigte Dicarbonsäureanhydride, Halbester oder Halbamide von monoethylenisch ungesättigten C₄₋₁₂-Dicarbonsäuren, Amide von C₃₋₁₂-Monocarbonsäuren oder Mischungen davon einpolymerisiert enthalten und Molmassen von 500 bis 30.000 g/Mol besitzen. Die Copolymerisate liegen in zumindest partiell neutralisierter Form in wäßriger Lösung oder in wäßriger Dispersion für den angegebenen Einsatzzweck vor.

Gegenstand der älteren Patentanmeldung DE-A-41 29 244 der Anmelderin ist die Verwendung wäßriger Dispersionen von Co-Oligomeren aus der radikalisch ausgelösten wäßrigen Emulsionscopolymersation im schwach sauren bis neutral eingestellten pH-Bereich von
(a) Halbestern der Maleinsäure mit oleophilen Alkoholen und/oder deren niederen Alkylenoxidaddukten und
(b) Acrylsäure und/oder Methacrylsäure
   als Hauptkomponenten, die auch zusätzlich
(c) untergeordnete Mengen von weiteren hydrophilen und/oder oleophilen Comonomeren im Oligomeren-Molekül enthalten können,
   als amphiphiles Mittel zur fettenden und auswaschfesten Ausrüstung von Leder und Pelzfellen.

Die erfindungsgemäße Lehre will eine für das hier vorgegebene Anwendungsgebiet der fettenden Ausrüstung von Ledern und Pelzen bisher nicht beschriebene Klasse von Oligomer- beziehungsweise Polymerverbindungen einsetzen, die einerseits anionisch modifiziert sind, zum anderen aber durch geeigneten Aufbau beziehungsweise Substitution als Material mit ausgesprochen fettenden Eigenschaften ausgerüstet ist. Als Grundstruktur der Polymerverbindungen wählt dabei die erfindungsgemäße Lehre die an sich bekannte Klasse der Polyurethane, wobei für die erfindungsgemäßen Zwecke insbesondere entsprechende Verbindungen vergleichsweise niedrigerer Molmassen in Betracht kommen. In diesem Sinne wird bei der nachfolgenden Erfindungsdefinition in der Regel der Begriff der Urethan-Oligomerverbindungen gewählt. Durch geeigneten Aufbau der Grundstruktur des Urethan-Polymermoleküls sowie durch die spezifische amphiphile Ausgestaltung dieser Polyurethanmoleküle im erfindungsgemäßen Sinne - gleichzeitiges Vorliegen von ausgesprochen oleophilen Molekülbestandteilen mit ausgeprägt fettendem Charakter neben hydrophilen, insbesondere anionisch ausgestalteten Substituenten am Urethan-Polymermolekül - werden durch die erfindungsgemäße Lehre neue Hilfsmittel für die Lederausrüstung zur Verfügung gestellt, die eine hohe Individualisierung beziehungsweise Ausprägung der jeweils gewünschten Funktionen des Ausrüstungshilfsstoffes im fertigen Leder ermöglichen. Im Vordergrund stehen hier als Zielvorstellungen die zuverlässig fettende Wirkung in Verbindung mit einer zuverlässigen Fixierung des fettenden Hilfsstoffes im Hautgefüge des Leders beziehungsweise des Pelzfelles. Darüberhinaus kann es wünschenswert sein, die fettenden Polyurethanverbindungen gleichzeitig als nachgerbende Hilfsstoffe einzusetzen. Wichtig ist dabei nicht nur eine hinreichende Möglichkeit der Fixierung des Hilfsstoffes auf Polyurethanbasis im Hautgefüge, vorgängig ist die einfache Applizierbarkeit und die sichere Penetration des fettenden und gegebenenfalls nachgerbenden amphiphilen Hilfsstoffes in das Haut- beziehungsweise Ledergefüge von wesentlicher Bedeutung.

Nachgerbstoffe auf Basis von Polyurethanen, insbesondere kationisch modifizierte Urethanpolymere beziehungsweise -oligomere sind aus der Literatur und Praxis bekannt, verwiesen sei auf entsprechende Handelsprodukte.

Die erfindungsgemäßen Hilfsstoffe auf Polyurethanbasis unterscheiden sich von diesen vorbekannten Mitteln durch die Polyfunktionalität der Molekülstruktur mit dem Schwergewicht in Richtung der fettenden Ausrüstung. Dabei geht die Lehre der Erfindung in bevorzugten Ausführungsformen von der Zielvorstellung aus, waschfeste und/oder gegenüber einer chemischen Reinigung beständige fettende Leder- und Pelzausrüstungen zur Verfügung zu stellen.

### Gegenstand der Erfindung

Gegenstand der Erfindung ist dementsprechend die Verwendung von wasserdispergierbaren und/oder wasseremulgierbaren Polymeren beziehungsweise Oligomeren auf Urethanbasis mit Fettcharakter - im nachfolgenden der einfachheithalber als "Urethan-Fettoligomere" bezeichnet - enthaltend bei wenigstens überwiegend nicht-vernetzter Grundstruktur des Polymerenbeziehungsweise Oligomeren-Moleküls Fettreste auf Kohlenwasserstoffbasis zusammen mit zur Salzbildung befähigten Säuregruppen als amphiphiles Mittel zur fettenden Ausrüstung und gewünschtenfalls zur Nachgerbung von Leder und Pelzfellen.

Die Lehre der Erfindung kann in dieser Ausführungsform insbesondere wichtig sein für die Ausrüstung mineralisch gegerbter Leder und/oder Pelzfelle, wobei hier die zuvor geschilderten amphiphilen Mittel der Erfindung gleichzeitig auch die nachgerbende Funktion übernehmen können.

### Einzelheiten zur Erfindung und ihren Ausführungsformen

Tragendes Element der erfindungsgemäßen Lehre ist die Verwendung der amphiphil ausgestalteten Oligomer- beziehungsweise Polymerverbindungen unter Einsatz des Fachwissens zum Aufbau entsprechender Verbindungen auf Polyurethanbasis.

Urethangruppen entstehen bekanntlich durch Umsetzung von Isocyanatgruppen mit Hydroxylgruppen. Die entsprechenden Oligomeren und/oder Polymeren werden durch polymeranaloge Umsetzung mehrfunktioneller Reaktanten sowohl auf der Seite der Isocyanate wie der Hydroxylgruppen-liefernden Verbindungen gewonnen. Zur Herstellung nicht-vernetzter, zum Beispiel im wesentlichen linearer Molekülstrukturen werden als tragende Bausteine dieser Reaktion 2-funktionelle Isocyanatverbindungen zusammen mit Diolen eingesetzt. Die Mitverwendung 1-funktioneller und dabei Isocyanat-reaktiver Komponenten, insbesondere die Mitverwendung von monofunktionellen Alkoholverbindungen, kann zur Beschränkung und Regelung des durchschnittlichen Molekulargewichts zweckmäßig sein. In den Rahmen der Erfindung fällt dementsprechend auch die Umsetzung der polyfunktionellen Isocyanate mit Gemischen von mehrfunktionellen und 1-funktionellen Alkoholen. Zum Aufbau der erfindungsgemäß gewünschten im wesentlichen nicht-vernetzten Polyurethangrundstruktur werden dabei in einer bevorzugten Ausführungsform wenigstens überwiegend sowohl auf der Seite der Isocyanatverbindungen wie der mehrfunktionellen Alkoholkomponenten jeweils di-funktionelle Verbindungen miteinander zur Reaktion gebracht.

Als di-funktionelle Isocyanat-Komponenten eignen sich alle bekannten aliphatischen, cycloaliphatischen und/oder aromatischen Diisocyanate, die im Falle entsprechender Ringverbindungen einkernig und/oder mehrkernig ausgebildet sein können. Lediglich beispielhaft seien aus den hier angesprochenen Gruppen jeweils einzelne Vertreter benannt:

Aliphatische geradkettige oder auch verzweigte Diisocyanate können beispielsweise durch Umsetzung entsprechender Diamine gewonnen werden. Typische Vertreter sind beispielsweise das Hexamethylendiisocyanat, das Trimethylhexamethylendiisocyanat oder das Tetramethylendiisocyanat. Beispiele für cycloaliphatische einkernige oder mehrkernige Diisocyanate sind Isophorondiisocyanat und Dicyclohexylmethandiisocyanat. Typische aromatische einkernige oder mehrkernige Diisocyanate sind beispielsweise Xylylendiisocyanat oder Diphenylmethandiisocyanate von der Art des 4,4'-Diphenyl-methandiisocyanat. Isocyanatverbindungen mit einer Funktionalität der Isocyanatgruppen oberhalb 2 führen bekanntlich zu zunehmend vernetzten Reaktionsprodukten mit steigender Härte und Sprödigkeit und entsprechen damit nicht der erfindungsgemäßen Zielsetzung, geschmeidige weiche und ausgeprägt fettende Urethan-Fettoligomere im Hautgefüge zum Einsatz zu bringen. Bezüglich der Auswirkung höherer Funktionalitäten - Funktionalitäten oberhalb von 2 - sowohl auf der Seite der Isocyanatkomponenten wie der Polyolkomponenten kann auf das allgemeine Fachwissen verwiesen werden. Benannt sei in diesem Zusammenhang beispielsweise die Monographie von Saunders and Frisch "Polyurethanes Chemistry and Technology", Band XVI der Serie High Polymers "Interscience Publishers", New York - London, Teil I (1962) und Teil 2 (1964).

Im Sinne der erfindungsgemäßen Lehre sind diese eine Mehrzahl von Urethangruppen enthaltenden Oligomerketten Träger für die beiden an sich entgegengesetzten Funktionen, die den amphiphilen Charakter des Polymer-Moleküls bedingen: Oleophile Strukturelemente mit ausgeprägtem Fettcharakter, die sowohl eine weiche Geschmeidigkeit wie die wasserabweisende Wirkung der imprägnierenden Ausrüstung gewährleisten, sowie andererseits hydrophile insbesondere anionische Strukturelemente, die in an sich bekannter Weise die Fixierung der Oligomer-Moleküle in dem Hautfasergefüge sicherstellen und in einer bevorzugten Ausführungsform zusätzlich die Funktion der Nachgerbung übernehmen können.

Die beiden in einem polymeren Molekül hier vereinigten Strukturelemente sind langkettige Kohlenwasserstoffreste mit ausgesprochenem Fettcharakter als hydrophobes Strukturelement und zur Salzbildung befähigte Säuregruppen beziehungsweise ihrer in wäßriger Phase dissoziierbaren Salze als das hydrophile Strukturelement. Im einzelnen sind dabei die folgenden Vertreter für diese beiden Funktionen bevorzugt:

Oleophile Molekülbestandteile mit ausgesprochen fettendem Charakter sind Kohlenwasserstoff-Fettreste ausreichend hoher Kohlenstoffzahl. Bevorzugt sind entsprechende Fettreste mit 8 bis 40 C-Atomen, wobei dem Bereich entsprechender Reste mit 12 bis 32 C-Atomen besondere Bedeutung zukommen kann. Es kann dabei insbesondere zweckmäßig sein, diese Fettreste in seitlicher Substitution an der Polyurethankette und/oder als die Molekülgröße begrenzende Endglieder des Urethan-Fettpolymeren vorzusehen. Einzelheiten hierzu werden im folgenden noch angegeben. Typische Vertreter für solche Fettreste auf Kohlenwasserstoffbasis sind entsprechende Reste von Fettsäuren und/oder Fettalkoholen natürlichen und/oder synthetischen Ursprungs. Diese fettenden Kohlenwasserstoffreste können dabei geradkettig und/oder verzweigt sein. Sie können gesättigt oder auch wenigstens anteilsweise 1- und/oder mehrfach olefinisch ungesättigt sein. Im Einzelfall kann durch die bestimmte Beschaffenheit und/oder durch die Menge der im Urethan-Fettpolymeren vorgesehenen Kohlenwasserstoff-Fettreste Einfluß auf die fettende und wasserabweisende Wirkung des erfindungsgemäßen amphiphilen Mittels beim praktischen Einsatz im Leder beziehungsweise Pelz genommen werden. Im einzelnen kann hier auf das allgemeine Wissen des Fachmanns verwiesen werden. Lediglich beispielhaft sei herausgestellt: Die wasserabweisende Wirkung des Urethan-Fettoligomeren kann durch Steigerung der Kettenlänge und/oder Erhöhung der Konzentration der entsprechenden Fettreste verstärkt werden. Durch anteilsweisen Einsatz von verzweigten Kohlenwasserstoffresten - insbesondere in Abmischung mit geradkettigen Resten - und/oder durch Verwendung beziehungsweise Mitverwendung von olefinisch ungesättigten Fettresten kann die Geschmeidigkeit, die Penetration der Urethan-Fettoligomere in das Hautgefüge und/oder das Schmierverhalten am imprägnierten Leder beeinflußt werden. Die Verwendung beziehungsweise Mitverwendung olefinisch ungesättigter Reste von Fettsäuren beziehungsweise Fettalkoholen kann im praktischen Gebrauch der imprägnierten Leder wichtig werden, wenn mit der Gefährdung durch hydrolytische Einflüsse zu rechnen ist.

Besonders geeignete fettende Strukturelemente der hier betroffenen Art leiten sich von entsprechenden Fettstoffen natürlichen Ursprungs ab und gehen damit auf Fettcarbonsäuren beziehungsweise entsprechende Fettalkohole des Bereichs von C₁₂₋₂₂, insbesondere C₁₂₋₁₈ zurück. Aber auch Dimerisierungsprodukte aus solchen Naturstoffen mit dann beispielsweise 16 bis 36 C-Atomen können interessante Vertreter für die hier betroffenen funktionellen Bausteine der Urethan-Fettoligomeren sein.

Der Einbau dieser hydrophoben Bestandteile mit Fettungscharakter kann in jeder an sich bekannten Weise erfolgen. Entsprechende Reste können beispielsweise über die in die Polyurethan-Bildungsreaktion einzusetzenden Diisocyanate derart eingebracht werden, daß Polyisocyanatverbindungen einer Funktionalität oberhalb 2 einer partiellen Umsetzung mit beispielsweise entsprechenden monofunktionellen Fettalkoholen zugeführt werden, dabei die Isocyanatfunktionalität auf Werte von im Mittel 2 zurückgeführt wird und derart fettsubstituierte Diisocyanate dann der weiterführenden Umsetzung mit Diolen und gegebenenfalls monofunktionellen Alkoholen zugeführt werden.

Einfacher ist in der Regel die Einführung der hydrophoben fettenden Bausteine über die Diolkomponenten und/oder die gegebenenfalls mitverwendeten monofunktionellen Alkohole. Monofunktionelle Fettalkohole der erfindungsgemäß betroffenen Art können als Endglieder der Urethan-Fettoligomeren vorgesehen sein. Sie entfalten hier ihre vorgesehene Wirkung im Gesamteigenschaftsbild der erfindungsgemäß verwendeten Hilfsmittel. Die Einführung von entsprechend fettenden Kohlenwasserstoffresten in das PUR-Molekül ist aber insbesondere auch über die Diolkomponenten möglich. Als Beispiele solcher Diole seien benannt: Partialester polyfunktioneller Alkohole mit einer Funktionalität von wenigstens 3 mit geeigneten Fettsäuren, etwa Monoester des Glycerins mit gesättigten und/oder ungesättigten Fettsäuren wie Glycerinmonostearat und/oder Glycerinmonooleat. Ebenso ist es aber auch möglich Fettsäuren mit Dialkanolaminen zu den entsprechenden Fettsäuredialkanolamiden umzusetzen und dann das entsprechende Diol - beispielsweise ein Fettsäurediethanolamid - als Diolkomponente in die PUR-Bildungsreaktion einzubringen.

Die erfindungsgemäß bevorzugten hydrophilen Bauelemente auf Basis der zur Salzbildung befähigten Säuregruppen sind entsprechende Reste mit Carboxylgruppen und/oder Sulfonsäuregruppen. Verbindungen dieser Art sind als Naturstoffe und/oder als Syntheseprodukte besonders leicht zugänglich. Sie finden darüberhinaus im Zusammenhang mit der Herstellung sogenannter selbstemulgierender PUR-Verbindungen praktische Verwendung. Die erfindungsgemäße Lehre kann insoweit bekanntes Fachwissen mitverwerten. Bekannt ist in diesem Zusammenhang beispielsweise die Mitverwendung von Dimethylolpropionsäure als Diolkomponente bei der PUR-Bildung, die auch erfindungsgemäß zur Einführung der hydrophilen Carboxylgruppe mitverwendet werden kann. Ein anderes Beispiel für eine entsprechende Diolcarbonsäure ist Weinsäure, die zu einer erhöhten Konzentration an Carboxylgruppen führt.

Die erfindungsgemäß gewünschte angehobene Konzentration von Säuregruppen kann insbesondere aber auch gerade über potentielle Endgruppen des Urethan-Fettoligomeren in das Molekül eingebracht werden. So können eine oder mehrere Carbonsäuregruppen tragende Alkohole wichtige Reaktanten beim Aufbau der Urethan-Fettoligomeren sein. Lediglich beispielhaft seien hier aufgezählt: Glykolsäure, Milchsäure, Hydroxybuttersäure, Hydroxyvaleriansäure, Äpfelsäure, Weinsäure, Citronensäure und/oder Ascorbinsäure.

Sinngemäß gelten die hier für die Einführung von Carboxylgruppen in das Urethan-Fettoligomer gemachten Angaben für den Aufbau entsprechender amphiphiler Mittel mit einem Gehalt an Sulfonsäuregruppen. Geeignete Reaktanten sind in diesem Zusammenhang beispielsweise Hydroxylgruppen enthaltende Mono- und/oder Disulfonsäuren.

Für die Zwecke der Erfindung ist die Verwendung von Urethan-Fettoligomeren bevorzugt, die im Mittel pro Oligomer-Molekül eine Mehrzahl sowohl von Säureresten als auch bevorzugt eine Mehrzahl von Kohlenwasserstoff-Fettresten aufweisen. Unter Berücksichtigung des allgemeinen Fachwissens und der hier gegebenen Erläuterungen der möglichen Bausteine für den Aufbau der amphiphilen Urethan-Oligomere kann im jeweils gewählten Einzelfall eine 0ptimierung leicht durchgeführt werden. Lediglich beispielhaft seien in diesem Zusammenhang noch einmal die zwei folgenden Möglichkeiten zur Herstellung der anionisch modifizierten Oligo-Urethane mit Fettcharakter herausgestellt:

Diisocyanate der eingangs genannten Art können umgesetzt werden mit
(a) Mischungen aus Säuregruppen, insbesondere Carbonsäuregruppen enthaltenden Diolen und gewünschtenfalls monofunktionellen Fettalkoholen oder mit
(b) Mischungen aus Fettgruppen-tragenden Diolen und Hydroxycarbonsäuren beziehungsweise Hydroxysulfonsäuren mit jeweils einem oder mehreren Hydroxyl- und/oder Carbonsäure- beziehungsweise Sulfonsäureresten.

In den Rahmen der erfindungsgemäßen Lehre fällt auch der Einsatz von amphiphilen Urethan-Fettoligomeren der geschilderten Art, die unterschiedliche Säurereste enthalten. Als Beispiele seien hier genannt: Verbindungen die sowohl Carboxylgruppen als auch Sulfonsäuregruppen enthalten, gegebenenfalls aber auch durch vorliegende Reste organischer Phosphorsäureverbindungen modifiziert sind.

Die PUR-Fettoligomeren weisen bevorzugte mittlere Molgewichte (Molmassen) im Bereich von etwa 500 bis 30.000 g/Mol auf. Geeignet können dabei insbesondere Molmassen im Bereich von etwa 1.000 bis 15.000 g/Mol sein. Es hat sich gezeigt, daß innerhalb dieser vergleichsweise breiten Bereiche den unteren Werten - mittlere Molgewichte beziehungsweise Molmassen im Bereich von etwa 1.000 bis 4.000 oder 5.000 g/Mol und zweckmäßigerweise im Bereich von etwa 1.000 bis 3.000 g/Mol - besondere Bedeutung zukommen kann.

Die letztlich zum Einsatz kommenden PUR-Oligomeren liegen erfindungsgemäß zweckmäßigerweise in Form wäßriger Dispersionen und/oder Emulsionen vor, die bevorzugt auf einen schwach sauren bis schwach alkalischen Bereich eingestellt worden sind. Zur Lagerstabilität kann es zweckmäßig sein, Anbietungsformen vorzusehen, deren wäßrige Phase durch Zugabe von anorganischen und/oder organischen Basen auf neutrale bis schwach alkalische pH-Werte eingestellt ist. Zur pH-Regulierung eignen sich alle im einschlägigen Stand der Technik beschriebenen Basen, vgl. auch hierzu die Angaben des eingangs zitierten Standes der Technik. Bevorzugte pH-Werte für lagerstabile Produkte können im Bereich um pH 7 bis 8 liegen. Es können auf diese Weise wäßrig-pastöse Massen hergestellt werden, deren PUR-Oligomer-Wertstoffgehalt beispielsweise im Bereich von etwa 20 bis 70 oder 75 Gew.-% liegt. Solche pastösen Massen sind mit Wasser und/oder wäßrigen Wirkstoffabmischungen der im nachfolgenden geschilderten Art jederzeit aufzumischen und zum praktischen Einsatz zu bringen.

In einer wichtigen Ausführungsform der Erfindung werden amphiphile Mittel der geschilderten Art zusammen mit ausgewählten Emulgatoren eingesetzt, die beim Eintrag in insbesondere mineralgegerbte Leder und/oder Felle eine zusätzliche Fettung beziehungsweise Hydrophobierung bewirken und bevorzugt gleichzeitig über saure Gruppen im gegerbten Leder beziehungsweise Fell fixiert werden können. Ein wichtiges Beispiel für Verbindungen dieser Art sind die eingangs genannten in Wasser emulgierbaren Sulfobernsteinsäure-Halbester, die von langkettigen Fettalkoholen und/oder ihren Alkylenoxidaddukten abstammen. Zur bestimmten Beschaffenheit der Alkohole gelten die zuvor im Zusammenhang mit den UR-Fettoligomeren gemachten Angaben. Ein wichtiges Beispiel für die Emulgatorenklasse der hier betroffenen Art sind C18-Sulfosuccinat-Halbester. Es hat sich gezeigt, daß durch die Mitverwendung solcher emulgatorartiger Hilfskomponenten - die an sich als Ausrüstungsmittel für die Lederfettung vorbekannt sind - im Sinne der erfindungsgemäßen Zielsetzung vorteilhafte Wirkungen erreicht werden können. Als Beispiele für Verbindungstypen dieser Art seien im einzelnen hier benannt:

Sulfobernsteinsäure-Halbester langkettiger Fettalkohole mit insbesondere 12 bis 24 C-Atomen und/oder deren Alkylenoxidaddukten mit bevorzugt bis zu 6 Alkylenoxidresten, entsprechende Sulfobernsteinsäure-Halbester von Fettsäuremono- und/oder -diglyceriden beziehungsweise deren Alkylenoxidaddukten mit bevorzugt bis zu 6 Al-kylenoxidresten bei weiterhin bevorzugter Kettenlänge der Fettsäure(n) im Bereich C₁₂₋₂₄, langkettige Sulfofettsäuren, insbesondere entsprechende alpha-Sulfofettsäuren mit vorzugsweise 12 bis 24, insbesondere 16 bis 18 C-Atomen, wobei im Falle dieser alphasubstituierten Sulfofettsäuren die Kohlenwasserstoffreste üblicherweise gesättigt sind, sowie innenständige Sulfofettsäuren von olefinisch 1- und/oder mehrfach ungesättigten Carbonsäuren wie Ölsäure, Linolsäure, Linolensäure und dergleichen.

Zusammen mit den Fett-Oligomeren im Sinne des erfindungsgemäßen Aufbaus können aber auch Fettungs- beziehungsweise Hydrophobierungsmittel im Sinne der Wertstoffgemische aus der eingangs zitierten EP 193 832 zum Einsatz kommen. In dieser Ausführungsform der Erfindung werden also die erfindungsgemäß definierten PUR-Oligomeren kombiniert mit imprägnierenden und/oder hydrophobierenden Fettungsmitteln, wie Sulfobernsteinsäuremonoester-Salze mit C₁₂₋₂₄-Fettresten, in Kombination mit weiteren imprägnierenden Fettungsmitteln, ausgewählt insbesondere aus der Gruppe der oxidierten oder oxidierten und teilsulfierten C₁₈₋₂₆-Kohlenwasserstoffe oder C₃₂₋₄₀-Vachse, eingesetzt. Andere Beispiele für diese zusätzlichen imprägnierenden Fettungsmittel sind Phosphorsäuremono-C₁₂₋₂₄-Alkylester, Partialester von Polycarbonsäuren wie Citronensäure-Mono-C₁₆-₂₄-Alkylester, Partialester von Polyalkoholen wie Sorbitan-, Glycerin- oder Pentaerythrit-C₁₆₋₂₄-Fettsäureester.

Eine besonders geeignete Emulgatorklasse, die im Rahmen der erfindungsgemäßen Lehre mitverwendet werden kann, sind die aus der Ausrüstung von Ledern und Pelzen mit Fettstoffen bekannten N-Acylaminosäuren, insbesondere Fettsäuresarkoside, z.B. N-Oleoylsarkosin, wie sie beispielsweise als Emulgatoren zum Eintrag von Silikonölen in Leder und Pelze in der EP-B1-0 213 480 im einzelnen beschrieben sind. Geeignete Emulgatoren sind demgemäß insbesondere Salze von N-(C₉₋₂₀-Acyl)-aminosäuren, wobei entsprechenden Salzen einer Aminosäure mit 2 bis 6 C-Atomen, die mit dem Acylrest einer gesättigten oder ungesättigten Fettsäure mit 9 bis 20 C-Atomen am Aminstickstoff, der gegebenenfalls zusätzlich durch Methyl substituiert ist, besondere Bedeutung zukommt. Geeignete Salze dieser Emulgatoren sind wiederum insbesondere Alkali-, Ammonium- oder Alkanolaminsalze.

Von den N-(C₉₋₂₀-Acyl)-aminosäuren sind solche mit 2 bis 4 C-Atomen und mit der Aminogruppe in alpha-Stellung zur Carboxylgruppe besonders bevorzugt, die weiterhin am Aminstickstoffatom zusätzlich durch eine Methylgruppe substituiert sind. Davon weisen eine besonders überlegene Wirkung die Fettsäuresarkoside von gesättigten oder ungesättigten Fettsäuren mit 9 bis 20, bevorzugt 16 bis 18 C-Atomen auf. Das bevorzugte Sarkosid ist das Ölsäuresarkosid. Weiterhin sind insbesondere das N-Stearoyl-sarkosin, N-Lauroyl-sarkosin und N-Isononanoyl-sarkosin besonders geeignet und zwar jeweils in Form ihrer Alkalisalze, Ammoniumsalze oder der Salze von Mono-, Di- oder Trialkanolaminen mit insbesondere 2 bis 4 C-Atomen im Alkanolrest.

Beim Einsatz von solchen Wertstoffgemischen beträgt die Menge der erfindungsgemäß definierten UR-Fettoligomeren bevorzugt wenigstens etwa 35 Gew.-% des Wertstoffgemisches und insbesondere wenigstens etwa 50 Gew.-% - auf gleiche Basis bezogen. Es kann zweckmäßig sein, wenigstens etwa 70 bis 80 Gew.-% des ingesamt in die auszurüstenden Leder beziehungsweise Pelzfelle einzubringenden Wertstoffgemisches auf Basis der erfindungsgemäßen amphiphilen Oligomeren beziehungsweise Polymeren vorzusehen.

Der Eintrag der Fett-Oligomeren über ihre Anbietungsform der wäßrigen Dispersion beziehungsweise ihrer Abmischungen mit den genannten weiteren Komponenten erfolgt in an sich bekannter Weise - siehe hierzu insbesondere auch die Angaben der eingangs genannten Druckschriften für vergleichbare Produkte. Nur kurz sei daher zusammenfassend dargestellt:

Die erfindungsgemäßen Oligomer-Dispersionen eigenen sich zur Behandlung von allen üblichen gegerbten Häuten, insbesondere entsprechendem Material, das mit Mineralgerbstoffen gegerbt worden ist. Die gegerbten Häute werden üblicherweise vor der Behandlung entsäuert. Sie können bereits vor der Behandlung gefärbt worden sein. Eine Färbung kann aber auch erst nach der erfindungsgemäß durchgeführten Behandlung vorgenommen werden.

Das zur imprägnierende Leder wird mit den Dispersionen in wäßriger Flotte zweckmäßig bei pH-Werten von etwa 4 bis 10 und vorzugsweise bei pH 5 bis 8 und bei Temperaturen von etwa 20 bis 60°C, vorzugsweise 30 bis 50°C, während eines Zeitraumes bis zu einigen Stunden gegebenenfalls mehrstufig behandelt. Die Behandlung erfolgt beispielsweise durch Walken in einem Faß. Die benötige Menge an Co-Oligomer-Dispersion beträgt üblicherweise 0,1 bis 30 Gew.-%, insbesondere 1 bis 20 Gew.-% bezogen auf das Falzgewicht des Leders oder das Naßgewicht der Pelzfelle. Die Flottenlänge beträgt üblicherweise 10 bis 1.000 %, vorzugsweise 30 bis 150 %, bei Pelzfellen 50 bis 500 %.

Nach Abschluß der Behandlung mit der wäßrigen Flotte wird der pH-Wert der Behandlungsflotte durch Zusatz von Säuren in den leicht sauren Bereich verschoben. Geeignet ist insbesondere der Zusatz organischer Säuren, bevorzugt Ameisensäure. Bevorzugte pH-Werte liegen im Bereich von 3 bis 5, vorzugsweise im Bereich von etwa 3,5 bis 4. Gewünschtenfalls kann eine Fixierung mit insbesondere Mineralgerbstoffen nachgeschaltet werden, wobei hier der Einsatz von Aluminiumsalzen aber auch von anderen mehrwertigen Mineralsalzen, z.B. Chrom- oder Zirkonsalzen, besonders bevorzugt sein kann.

Die nachfolgenden Beispiele beschreiben zunächst die Herstellung erfindungsgemäß geeigneter PUR-Fett-Oligomere und nachfolgend deren Einsatz zum Ausrüsten von Leder im erfindungsgemäßen Sinne.

### Beispiele

### Beispiel 1

599.4 g Isophorondiisocyanat, 241.2 g Dimethylolpropionsäure und 181.8 g Triethylamin werden zusammen mit 3 g Dibutylzinndilaurat in 1.65 l Aceton 60 min unter Rückfluß erhitzt. Anschließend werden 489.6 g eines Fettalkohols (Handelsprodukt "Lorol C18") zugegeben und weitere 240 min unter Rückfluß erhitzt. Nach dem Destillieren des Acetons werden zu der hochviskosen Masse 3.34 l 80°C warmes Wasser gegeben. Die erhaltene Dispersion ist stabil und weist einen Feststoffgehalt von ca. 27 % auf.

### Beispiel 2

126 g Trimethylhexamethylendiisocyanat, 53.6 g Dimethylolpropionsäure und 40.5 g Triethylamin werden zusammen mit 0.13 g Dibutylzinndilaurat in 275 g Aceton 60 min unter Rückfluß erhitzt. Anschließend werden 108.8 g eines Fettalkohols (Handelsprodukt "Lorol C18") zugegeben und weitere 180 min unter Rückfluß erhitzt. Nach dem Destillieren des Acetons werden zu der viskosen Masse 500 g 80°C warmes Wasser gegeben. Die erhaltene Dispersion ist nach 60 min Rühren stabil und weist einen Feststoffgehalt von ca. 34 % auf.

### Beispiel 3

126 g Trimethylhexamethylendiisocyanat, 53.6 g Dimethylolpropionsäure und 40.5 g Triethylamin werden zusammen mit 0.13 g Dibutylzinndilaurat in 275 g Aceton 60 min unter Rückfluß erhitzt. Anschließend werden 76.1 g eines Fettalkohols (Handelsprodukt "Lorol C12") zugegeben und weitere 180 min unter Rückfluß erhitzt. Nach dem Destillieren des Acetons werden zu der viskosen Masse 500 g 80°C warmes Wasser gegeben. Die erhaltene Dispersion ist nach 60 min Rühren stabil und weist einen Feststoffgehalt von ca. 32 % auf.

### Beispiel 4

126 g Trimethylhexamethylendiisocyanat, 40.2 g Dimethylolpropionsäure und 30.4 g Triethylamin werden zusammen mit 0.39 g Dibutylzinndilaurat in 250 g Aceton 60 min unter Rückfluß erhitzt. Anschließend werden 163.2 g eines Fettalkohols (Handelsprodukt "Lorol C18" zugegeben und weitere 240 min unter Rückfluß erhitzt. Nach dem Destillieren des Acetons werden zu der viskosen Masse 540 g 80°C warmes Wasser gegeben. Die erhaltene Dispersion ist nach 60 min Rühren stabil und weist einen Feststoffgehalt von ca. 35 % auf.

### Beispiel 5

126 g Trimethylhexamethylendiisocyanat, 40.2 g Dimethylolpropionsäure und 30.4 g Triethylamin werden zusammen mit 0.13 g Dibutylzinndilaurat in 250 g Aceton 60 min unter Rückfluß erhitzt. Anschließend werden 114.1 g eines Fettalkohols (Handelsprodukt "Lorol C12") zugegeben und weitere 330 min unter Rühren erhitzt. Nach dem Destillieren des Acetons werden zu der viskosen Masse 465 g 80°C warmes Wasser gegeben. Die erhaltene Dispersion ist nach 60 min Rühren stabil und weist einen Feststoffgehalt von ca. 35 % auf.

### Beispiel 6

126 g Trimethylhexamethylendiisocyanat, 53.6 g Dimethylolpropionsäure werden zusammen mit 0.13 g Dibutylzinndilaurat in 21.6 g Triacetin 90 min auf 80°C erhitzt. Anschließend werden 108.8 g eines Fettalkohols (Handelsprodukt "Lorol C18" zugegeben und weitere 120 min erhitzt. Zu der viskosen Masse werden 445 g 80°C warmes Wasser versetzt mit 27.2 g 25-%iger Ammoniaklösung gegeben. Die erhaltene Dispersion ist nach 60 min Rühren stabil und weist einen Feststoffgehalt von ca. 38 % auf.

### Beispiel 7

126 g Trimethylhexamethylendiisocyanat, 40.2 g Dimethylolpropionsäure werden zusammen 180 min auf 80° C erhitzt. Anschließend werden 163.2 g eines Fettalkohols (Handelsprodukt "Lorol C18") zugegeben und weitere 120 min erhitzt. Zu der viskosen Masse werden 490 g 80°C warmes Wasser versetzt mit 5.1 g 25-%iger Ammoniaklösung gegeben. Die erhaltene Dispersion ist stabil und weist einen Feststoffgehalt von ca. 43 % auf.

### Beispiel 8

126 Trimethylhexamethylendiisocyanat, 40.2 g Dimethylolpropionsäure werden in 21 g Triacetin 120 min auf 80°C erhitzt. Anschließend werden 114.1 g eines Fettalkohols (Handelsprodukt "Lorol C18") zugegeben und weitere 120 min erhitzt. Zu der viskosen Masse werden 415 g 80°C warmes Wasser versetzt mit 5.1 g 25-%iger Ammoniaklösung gegeben. Die erhaltene Dispersion ist nach 60 min Rühren stabil und weist einen Feststoffgehalt von ca. 39 % auf.

### Beispiel 9

157.2 g Dicyclohexylmethandiisocyanat, 53.6 g Dimethylolpropionsäure und 40.5 g Triethylamin werden zusammen mit 0.5 g Dibutylzinndilaurat in 275 g Aceton 180 min unter Rückfluß erhitzt. Anschließend werden 76.1 g eines Fettalkohols (Handelsprodukt "Lorol C12") zugegeben und weitere 210 min erhitzt. Nach der Destillation des Acetons werden zu der hochviskosen Masse 420 g 80°C warmes Wasser gegeben. Die erhaltene Dispersion ist nach 60 min Rühren stabil und weist einen Feststoffgehalt von ca. 41 % auf.

### Beispiel 10

100.9 g Hexamethylendiisocyant, 53.6 g Dimethylolpropionsäure und 40.5 g Triethylamin werden zusammen mit 0.5 g Dibutylzinndilaurat in 275 g Aceton 90 min unter Rückfluß erhitzt. Anschließend werden 108.8 g eines Fettalkohols (Handelsprodukt "Lorol C18") zugegeben und weitere 390 min erhitzt. Nach der Distillation des Acetons werden zu der viskosen Masse 455 g 80°C warmes Wasser gegeben. Die erhaltene Dispersion ist stabil und weist einen Feststoffgehalt von ca. 35 % auf.

### Beispiel 11

Die nach den Beispielen 1 - 10 hergestellten Produkte wurden gemäß der nachfolgenden ledertechnischen Arbeitsweise (Rezeptur) eingesetzt und ausgetestet.

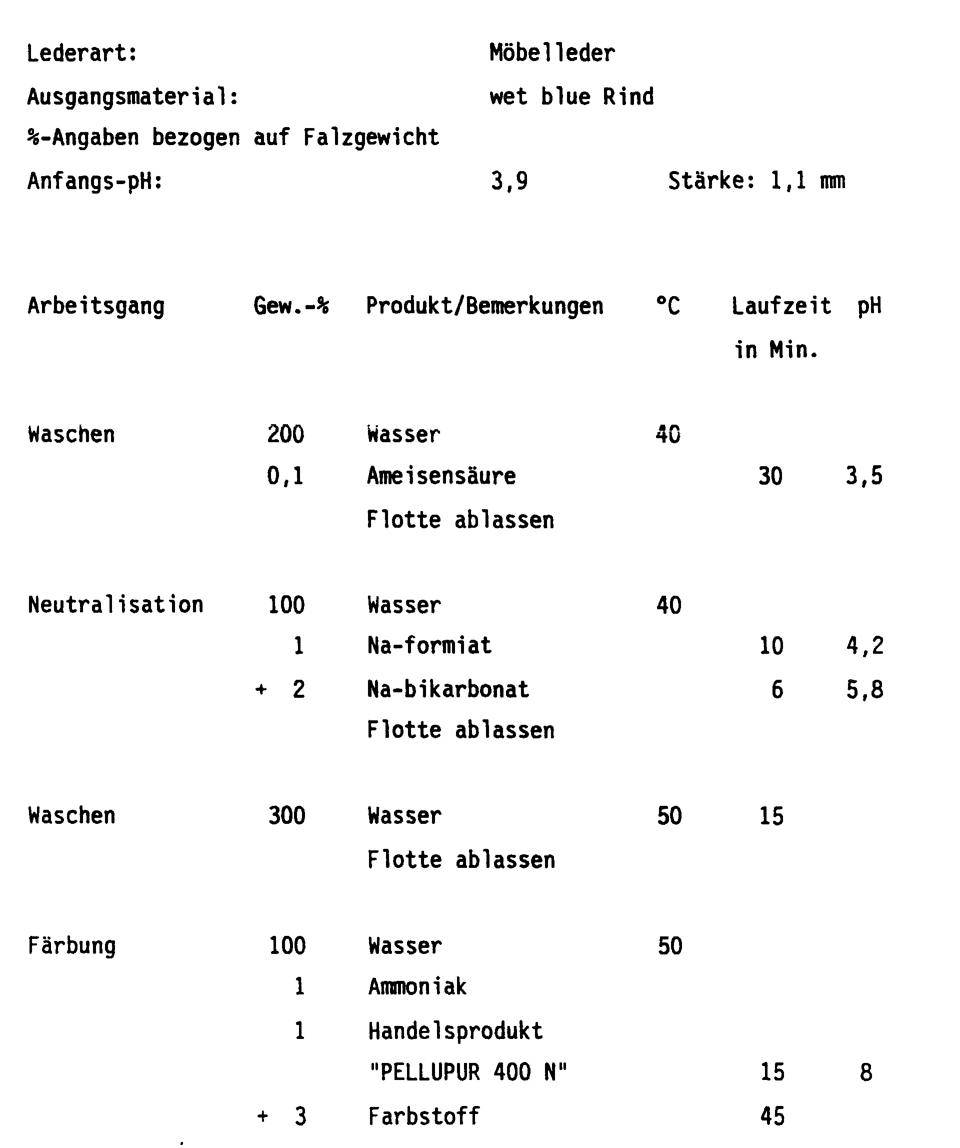

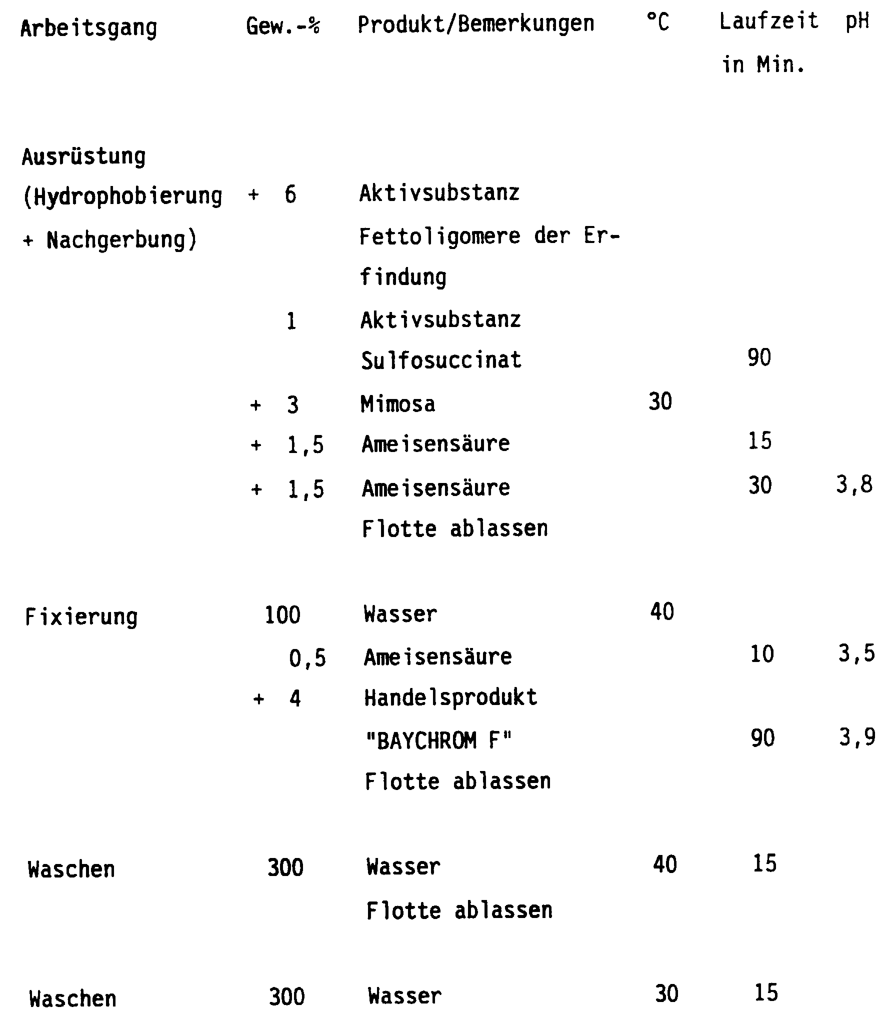

Leder über Nacht auf Bock, naß spannen, trocknen 50°C, 40 % relative Luftfeuchte, konditionieren, millen, spannen.

Die in dieser Arbeitsanweisung angegebenen Handelsprodukte sind:
"PELLUPUR 400 N" ist ein komplexaktives, dispergierendes, egalisierendes Färbereihilfsmittel
"BAYCHROM F" ist ein organisch maskierter selbstabstumpfender 50%iger basischer Chromgerbstoff

Bei Überprüfung der Hydrophobierung im Bally Penetrometer gemäß der Messmethode IUP 10, der Internationen Union der Leder-Chemiker-Verbände, Komnission für physikalische Lederprüfung, vgl. das Leder, Band 12, 36 bis 40 (1961) wurden folgende Werte gefunden (siehe Tabelle I)

**Tabelle 1**

| Penetrometerwerte bei 15% Stauchung | | |
|---|---|---|
| Beispiel | Wasserdurchtritt | Wasseraufnahme nach 6 h |
| 1 | 140 | 41% |
| 2 | 180 | 33% |
| 3 | 200 | 34% |
| 4 | 130 | 55% |
| 5 | 120 | 62% |
| 6 | 420 | 24% |
| 7 | 240 | 35% |
| 8 | 140 | 43% |
| 9 | 180 | 35% |
| 10 | 230 | 32% |

Die Prüfung von Waschbarkeit und Chemischreinigungsechtheit wurde nach folgenden Verfahren durchgeführt:

Aus dem klimatisierten Versuchsledern werden Quadrate von 10 cm x 10 cm ausgestanzt. Sie werden genau gemessen, die Fläche wird bestimmt und das Gewicht vor dem Waschen und dem chemischen Reinigen ermittelt.

### a) Waschversuche

Die Lederproben werden einzeln in 60°C warmen Wasser mit phosphatfreiem Textilwaschmittel (PERSIL^{(R)}) gewaschen. Der Versuch soll den Waschbedingungen eines Sportschuhes in einer Haushaltswaschmaschine entsprechen. Nach dem Waschen werden die Leder an der Luft getrocknet.

### b) Chemische Reinigung

Die Leder werden einzeln in einer Maschine mit Perchlorethylen chemisch gereinigt und anschließend abgelüftet.

Die Klimatisierung erfolgt nach dem Waschversuch (a) und der chemischen Reinigung (b), 24 Stunden: nach DIN 53303. Die Kennzahlen wurden für beide Versuche ermittelt und bewertet.

Die erhaltenen Ergebnisse sind aus der nachfolgenden Tabelle II ersichtlich.

**Tabelle II**

| Waschbarkeit und Chemischreinigungsechtheit | | | | |
|---|---|---|---|---|
| Beispiel | Waschbarkeit | | Chemischreinigungsechtheit | |
| | m=Masse | F=Fläche | m=Masse | F=Fläche |
| 1 | -0,40% | -8,20% | -6,1% | -5,3% |
| 2 | -0,52% | -7,30% | -4,2% | -3,7% |
| 3 | -0,54% | -0,78% | -3,7% | -4,2% |
| 4 | -0,45% | -0,35% | -2,4% | -4,1% |
| 5 | -0,61% | -0,45% | -4,6% | -3,8% |
| 6 | -0,50% | -0,45% | -5,2% | -3,8% |
| 7 | -0,42% | -0,38% | -5,2% | -4,2% |
| 8 | -0,45% | -0,42% | -4,8% | -3,5% |
| 9 | -0,43% | -0,51% | -4,9% | -3,8% |
| 10 | -0,50% | -0,48% | -4,5% | -3,5% |
| m = Gewichtsdifferenz (- = Abnahme; + = Zunahme) | | | | |
| F = Flächendifferenz (- = Abnahme; + = Zunahme) | | | | |

## Patentansprüche

1. Verwendung von wasserdispergierbaren und/oder wasseremulgierbaren Urethan-Oligomeren mit Fettcharakter (UR-Fettoligomere), enthaltend bei wenigstens überwiegend nicht-vernetzter Grundstruktur des Oligomer-Moleküls Kohlenwasserstoff-Fettreste zusammen mit zur Salzbildung befähigten Säuregruppen als amphiphiles Mittel zur fettenden Ausrüstung und gewünschtenfalls Nachgerbung von Leder und Pelzfellen.

2. Ausführungsform nach Anspruch 1, dadurch gekennzeichnet, daß die UR-Fettoligomeren Kohlenwasserstoff-Fettreste mit 8 bis 40 C-Atomen, vorzugsweise mit 12 bis 32 C-Atomen, enthalten, die sich bevorzugt von entsprechenden Fettsäuren und/oder Fettalkoholen ableiten, dabei geradkettig und/oder verzweigt sind und auch 1- und/oder mehrfach olefinisch ungesättigt sein können.

3. Ausführungsform nach Ansprüchen 1 und 2, dadurch gekennzeichnet, daß die UR-Fettoligomeren Carbonsäure- und/oder Sulfonsäuregruppen enthalten, die als solche oder auch in Form ihrer wasserdissoziierbaren Salze vorliegen können.

4. Ausführungsform nach Ansprüchen 1 bis 3, dadurch gekennzeichnet, daß die UR-Fettoligomeren im Mittel pro Oligomermolekül eine Mehrzahl von Säureresten und bevorzugt eine Mehrzahl von Kohlenwasserstoff-Fettresten aufweisen.

5. Ausführungsform nach Ansprüchen 1 bis 4, dadurch gekennzeichnet, daß die UR-Fettoligomeren sich von aliphatischen, cycloaliphatischen und/oder aromatischen Diisocyanaten und Säuregruppen und/oder Fettgruppen-tragenden Diolen sowie gewünschtenfalls monofunktionellen Alkoholen ableiten, die ebenfalls Fett- und/oder Säurereste enthalten können.

6. Ausführungsform nach Ansprüchen 1 bis 5, dadurch gekennzeichnet, daß die anionisch modifizierten Oligo-Urethane mit Fettcharakter Umsetzungsprodukte von Diisocyanaten
a) mit Mischungen aus Säuregruppen, insbesondere Carbonsäuregruppen, enthaltenden Diolen und monofunktionellen Fettalkoholen oder
b) Mischungen aus Fettgruppen-tragenden Diolen und Hydroxycarbonsäuren mit jeweils einem oder mehreren Hydroxyl- und/oder Carbonsäureresten sind.

7. Ausführungsform nach Ansprüchen 1 bis 6, dadurch gekennzeichnet, daß die UR-Fettoligomeren unter Mitverwendung von Partialestern 3- und/oder höherwertiger Alkohole mit langkettigen Fettsäuren, zum Beispiel entsprechenden Monoglyceriden oder Fettsäurealkanolamiden, und Hydroxylgruppen-enthaltenden Mono- und/oder Polycarbonsäuren, wie Glykolsäure, Milchsäure, Hydroxybuttersäure, Äpfelsäure, Citronensäure, beziehungsweise unter Einsatz von Diolen mit Carboxylgruppen, wie Dimethylolpropionsäure und/oder Weinsäure, und Fettalkoholen hergestellt worden sind.

8. Ausführungsform nach Ansprüchen 1 bis 7, dadurch gekennzeichnet, daß UR-Fettoligomere mit mittleren Molekulargewichten (Molmassen) von 500 bis 30.000 g/Mol, vorzugsweise von etwa 1.000 bis 15.000 g/Mol eingesetzt werden, wobei die Verwendung der UR-Fettoligomeren niedrigen Molgewichtes mit Molmassen beispielsweise im Bereich von etwa 1.000 bis 4.000 g/Mol besonders bevorzugt sein kann.

9. Ausführungsform nach Ansprüchen 1 bis 8, dadurch gekennzeichnet, daß die UR-Fettoligomeren in Form wäßriger Dispersionen und/oder Emulsionen verwendet werden, die bevorzugt auf einen schwach sauren bis schwach alkalischen pH-Bereich eingestellt worden sind.

10. Ausführungsform nach Ansprüchen 1 bis 9, dadurch gekennzeichnet, daß die amphiphilen UR-Fettoligomeren zusammen mit Emulgatoren verwendet werden, die beim Eintrag in insbesondere mineralgegerbte Leder und/oder Felle eine zusätzliche Fettung bewirken und bevorzugt gleichzeitig über saure Gruppen im gegerbten Leder beziehungsweise Fell fixiert werden können.

11. Ausführungsform nach Ansprüchen 1 bis 10, dadurch gekennzeichnet, daß die UR-Fettoligomeren nach ihrem Eintrag in die auszurüstenden Leder und/oder Pelzfelle darin durch eine Nachbehandlung mit insbesondere Mineralgerbstoffen fixiert werden.

## Claims

1. The use of water-dispersible and/or water-emulsifiable urethane oligomers of fatty character (UR fatty oligomers) containing hydrocarbon fatty groups together with acid groups capable of salt formation in an at least predominantly uncrosslinked basic structure of the oligomer molecule for the oiling and, optionally, retanning of leather and skins.

2. The use claimed in claim 1, characterized in that the UR fatty oligomers contain hydrocarbon fatty groups with 8 to 40 and preferably 12 to 32 carbon atoms which are preferably derived from corresponding fatty acids and/or fatty alcohols, may be linear and/or branched and may even be mono- and/or polyolefinically unsaturated.

3. The use claimed in claims 1 and 2, characterized in that the UR fatty oligomers contain carboxylic acid and/or sulfonic acid groups which may be present as such or even in the form of their water dissociable salts.

4. The use claimed in claims 1 to 3, characterized in that the UR fatty oligomers contain on average a plurality of acid groups and preferably a plurality of hydrocarbon fatty groups per oligomer molecule.

5. The use claimed in claims 1 to 4, characterized in that the UR fatty oligomers are derived from aliphatic, cycloaliphatic and/or aromatic diisocyanates and diols containing acid groups and/or fatty groups and, if desired, monohydric alcohols which may also contain fatty and/or acid groups.

6. The use claimed in claims 1 to 5, characterized in that the anionically modified oligourethanes of fatty character are reaction products of diisocyanates with
(a) mixtures of diols containing acid groups, more particularly carboxylic acid groups, and monohydric fatty alcohols or
(b) mixtures of diols containing fatty groups and hydroxycarboxylic acids containing one or more hydroxyl and/or carboxylic acid groups.

7. The use claimed in claims 1 to 6, characterized in that the UR fatty oligomers have been produced using partial esters of trihydric and/or higher alcohols with long-chain fatty acids, for example corresponding monoglycerides or fatty acid alkanolamides, and hydroxyfunctional mono- and/or polycarboxylic acids, such as glycolic acid, lactic acid, hydroxybutyric acid, malic acid, citric acid, or using carboxyfunctional diols, such as dimethylol propionic acid and/or tartaric acid, and fatty alcohols.

8. The use claimed in claims 1 to 7, characterized in that UR fatty oligomers with average molecular weights of 500 to 30,000 g/mole and preferably in the range from about 1,000 to 15,000 g/mole are used, the use of UR fatty oligomers with low molecular weights in the range from about 1,000 to 4,000 g/mole being particularly preferable.

9. The use claimed in claims 1 to 8, characterized in that the UR fatty oligomers are used in the form of aqueous dispersions and/or emulsions which have preferably been adjusted to a mildly acidic to mildly alkaline pH value.

10. The use claimed in claims 1 to 9, characterized in that the amphiphilic UR fatty oligomers are used together with emulsifiers which, on introduction into - in particular - mineral-tanned leather and/or skins, have an additional oiling effect and, at the same time, can be fixed in the tanned leather or skin via acidic groups.

11. The use claimed in claims 1 to 10, characterized in that, after introduction into the leather and/or skins to be oiled, the UR fatty oligomers are fixed therein by an aftertreatment, more particularly with mineral tanning agents.

## Revendications

1. Utilisation d'oligoméres d'uréthane à caractère gras (oligoméres d'UR gras), dispersibles et/ou émulsionnables dans l'eau, contenant avec une structure de base de la molécule d'oligomère au moins en majeure partie non réticulée, des radicaux gras hydrocarbonés conjointement avec des groupes d'acides aptes à la salification comme agent amphiphile pour l'apprêtage gras et, le cas échéant, le retannage du cuir et des astrakans.

2. Forme de réalisation selon la revendication 1, caractérisée en ce que les oligomères d'UR gras renferment des radicaux gras hydrocarbonés comportant 8 à 40 atomes de C, de préférence 12 à 32 atomes de C, qui sont dérivés de préférence d'acides gras et/ou d'alcools gras correspondants, sont en même temps à chaîne droite et/ou ramifiée et peuvent également être à insaturation mono- et/ou polyoléfinique.

3. Forme de réalisation selon les revendications 1 et 2, caractérisée en ce que les oligoméres d'UR gras renferment des groupes d'acides carboxylique et/ou d'acides sulfoniques, qui peuvent être présents en tant que tels ou également sous la forme de leurs sels dissociables dans l'eau.

4. Forme de réalisation selon les revendications 1 à 3, caractérisée en ce que les oligomères d'UR gras présentent en moyenne par molécule d'oligomére une majorité de radicaux acides et de préférence une majorité de radicaux gras hydrocarbonés.

5. Forme de réalisation selon les revendications 1 à 4, caractérisée en ce que les oligoméres d'UR gras dérivent de diols portant des groupes acides et/ou des groupes gras, et/ou de diisocyanates aliphatiques, cycloaliphatiques et/ou aromatiques ainsi que, le cas échéant, d'alcools monofonctionnels, qui peuvent également contenir des radicaux gras et/ou acides.

6. Forme de réalisation selon les revendications 1 à 5, caractérisée en ce que les oligo-uréthanes à caractère gras, modifiés de façon anionique sont des produits de réaction de diiisocyanates
a) avec des mélanges de diols renfermant des groupes d'acides, en particulier des groupes d'acides carboxyliques et des alcools monofonctionnels ou
b) des mélanges de diols portant des yroupes gras et d'acides hydroxycarboxyliques avec chaque fois un ou plusieurs radicaux hydroxyle et/ou d'acides carboxyliques.

7. Forme de réalisation selon les revendications 1 à 6, caractérisée en ce que les oligoméres gras d'UR ont été fabriqués en co-utilisant des esters partiels d'alcools trivalents et/ou de valence plus élevée avec des acides gras à chaîne longue, par exemple, des monoglycérides ou des alcanolamides d'acides gras correspondants et des acides mono- et/ou polycarboxyliques renfermant des groupes hydroxyle, tels les acides glycolique, lactique, hydroxybutyrique, maléique et citrique, ou en utilisant des diols comportant des groupes carboxyle, tels l'acide diméthylolpropionique et/ou l'acide tartrique, et des alcools gras.

8. Forme de réalisation selon les revendications 1 à 7, caractérisée en ce que l'on utilise des oligomères gras d'UR avec un poids moléculaire moyen (masse molaire) de 500 à 30 000 g/mole, de préférence, d'environ 1000 à 15 000 g/moles, l'utilisation d'oligomères d'UR gras de poids moléculaire inférieur avec une masse molaire située, par exemple, dans l'intervalle d'environ 1000 à 4000 g/mole étant particulièrement préférée.

9. Forme de réalisation selon les revendications 1 à 8, caractérisée en ce que les oligomères gras d'UR sont utilisés sous la forme de dispersions et/ou d'émulsions aqueuses, dont le pH est ajusté de préférence dans un intervalle légèrement acide à légèrement alcalin.

10. Forme de réalisation selon les revendications 1 à 9, caractérisée en ce que les oligomères gras d'UR amphiphiles sont utilisés conjointement avec des émulsionnants, qui induisent un graissage supplémentaire lors de l'introduction, en particulier, dans le cuir et/ou dans la peau ayant fait l'objet d'un tannage minéral, et peuvent être fixés, de préférence en même temps, dans le cuir ou la peau tannée, via des groupes acides.

11. Forme de réalisation selon les revendications 1 à 10, caractérisée en ce que les oligomères gras d'UR après leur introduction dans le cuir et/ou dans la peau à apprêter y sont fixés par un traitement postérieur, en particulier avec des tanins minéraux.
